# EUROPEAN PATENT APPLICATION

(11) **EP 4 841 402 A1**
(43) Date of publication of application: **18.11.2026**
(21) Application number: 26178813.7
(22) Date of filing: 14.05.2026
(51) Int. Cl.: G06F 3/01, B25J 9/16, G06T 19/00

(54) **CONTROL METHOD OF A HANDLING SYSTEM OF AN ARTICLE**

(30) Priority: 14.05.2025 IT 202500010810
(71) Applicant: G.D S.p.A., 40133 Bologna (IT)
(72) Inventor: SUMINI, Valentina, 40133 Bologna (IT); CALABRESE, Giuseppe, 40133 Bologna (IT); GHINI, Marco, 40133 Bologna (IT); BIONDI, Andrea, 40133 Bologna (IT)
(74) Representative: Tirloni, Bartolomeo

(57) **Abstract**

Control method of a handling system (2) of an article (3), comprising scanning a real space (RS) containing the article to obtain a digital scan of the real space (RS), visualizing, in superposition to a visualization of the real space (RS), a virtual element (V) defining a control volume (cv1), modifying, as a function of a received user command, the virtual element (V) so that said control volume (cv1) encloses, in the visualization of the real space (RS), a portion of said visualization of said real space (RS) in which said article (3) is represented, obtaining a mesh (M) of the portion of the visualization of the real space (RS) enclosed by the control volume (cv1) as a function of a portion of the digital scan corresponding to the portion of the visualization of the real space, setting a control parameter (CP) as a function of the mesh (M), and controlling the handling system (2) as a function of the control parameter (CP).

## Description

### Technical field of the invention

The present invention relates to a control method of a handling system of an article.

### State of the art

In industrial plants, especially in the context of mass production of consumer goods, including the packaging phase, it is known to use handling systems of such articles, for example in order to handle such articles along transport paths.

### Summary of the invention

The term "article" means any physical object, including both a finished product and a semi-finished product during one or more phases of a respective production or treatment process. Examples of articles may be flat or folded sheets or three-dimensional objects, made of paper, cardboard, polymeric material, composite material, metallic material, containers, boxes, packages, mechanical parts, components of complex products to be assembled together to realize such complex products, garments or items of clothing, pieces of fabric, etc.

In the aforementioned context of handling articles, the Applicant faced the problem of being able to control a handling system of an article in a simple and/or intuitive manner, for example in terms of interaction between user and machine, and at the same time efficiently, for example in terms of required computational burden.

According to the Applicant, the aforementioned problem is solved by a control method of a handling system of an article according to the appended claims and/or having one or more of the following features.

According to one aspect the invention relates to a control method a handling system of an article.

Preferably the method comprises scanning, by means of an acquisition device, a real space containing said article to obtain a digital scan of said real space (and of said article). Preferably the method comprises visualizing, by means of an artificial reality system, in superposition to a visualization of said real space, a virtual element defining a control volume.

Preferably the method comprises receiving a user command as input.

Preferably the method comprises modifying, as a function of said received user command, said virtual element so that said control volume encloses, in the visualization of the real space, a portion of said visualization of said real space in which said article is represented.

Preferably the method comprises obtaining a mesh of said portion of the visualization of the real space enclosed by said control volume as a function of a portion of said digital scan corresponding to said portion of said visualization of the real space (as a consequence of a one-to-one correlation between said digital scan and said visualization of the real space).

Preferably the method comprises setting a control parameter of said handling system as a function of said mesh.

Preferably the method comprises controlling said handling system as a function of said control parameter.

The term "mesh" means any digital mesh representation, such as for example a polygonal type representation, also known as a "polygonal mesh".

According to the Applicant, the control method according to the present invention enables simple and intuitive control, and at the same time efficient control in terms of computational effort, of a handling system, for example in terms of manipulating the desired article.

In fact, the visualization, by means of an artificial reality system, of the virtual element in superposition to the visualization of the real space and the possibility of modifying such virtual element in order to enclose, within the control volume defined thereby, the portion of the visualization of the real space in which the article is represented, enables the provision of a highly simple and intuitive user interface. Any user, regardless of user skills, can autonomously recognize, in the viewed visualization of the real space, the article that the user wishes to handle, and enclose, by means of modification of the virtual element (for example by means of manipulating), the representation of such article within the control volume, with immediate feedback regarding the correctness of the performed operations (e.g. complete inclusion of the article within the control volume). In fact, thanks to the use of an artificial reality system capable of showing the user both the real space, with the article, and the virtual element in superposition, the user operates in an intuitive environment that is simple to manage, without the need to use computer skills and/or software programming capabilities.

On the other hand, obtaining the mesh (also referred to in technical jargon as a "mesh") of the (only) portion of the visualization of the real space enclosed by the control volume as a function of a corresponding portion of the digital scan (e.g. made corresponding as a consequence of a one-to-one correlation between the digital scan and the visualization of the real space, for example by referencing both the digital scan and the visualization of the real space with respect to a common reference system), enables limiting the computational burden to the (only) processing of the portion of the digital scan corresponding to the aforementioned portion of the visualization, and therefore to the realization of the mesh of substantially only the article to be handled. In other words, the virtual element, visualized in superposition to the visualization of the real space, represents a three-dimensional virtual "mask", positionable and modifiable at will by the user in an intuitive manner within the entire visualization of the real space, which delimits a portion of the visualization of the real space, and therefore a corresponding portion of the digital scan, only with respect to which the system processes the mesh useful for controlling the handling system.

According to the Applicant, this ultimately enables strongly limiting the computational effort (which is largely realized in obtaining the aforementioned mesh of the portion of the visualization) and therefore obtaining greater efficiency (with respect for example to obtaining the mesh of the entire visualization of the real space-which is typically much larger than the region of space occupied by the article), shorter processing time, greater responsiveness to user commands and therefore greater simplicity, speed, efficiency, etc. The present invention in one or more of the aforementioned aspects may have one or more of the following preferred features.

Preferably said artificial reality comprises extended reality (XR). In the context of the present invention, extended reality means, for example, all real and virtual combined environments and human-machine interactions generated by computer technology and wearable devices. For example, extended reality may comprise, without limitation, representative forms such as augmented reality (AR), mixed reality (MR), augmented virtuality (AV), virtual reality (VR, particularly advantageous for remote control of the handling system), and areas blended therebetween.

According to another aspect, the present invention relates to a control apparatus of a handling system of an article.

Preferably said apparatus comprises an artificial reality system.

Preferably said apparatus comprises (at least) an acquisition device structured to scan a real space containing said article to obtain a digital scan of said real space (and said article).

Preferably said artificial reality system is structured to visualize, in superposition to a visualization of said real space, a virtual element defining a control volume.

Preferably said artificial reality system comprises a processing unit.

Preferably said processing unit is programmed to receive a user command as input.

Preferably said processing unit is programmed to modify, as a function of said received user command, said virtual element so that said control volume encloses, in the visualization of the real space, a portion of said visualization of said real space in which said article is represented.

Preferably said processing unit is programmed to obtain a mesh of said portion of the visualization of the real space enclosed by the control volume as a function of a portion of said digital scan corresponding to said portion of said visualization of the real space. Preferably said processing unit is programmed to set a control parameter of said handling system as a function of said mesh.

Preferably said processing unit is programmed to control said handling system as a function of said control parameter.

Preferably said processing unit is programmed to implement one or more of the, more preferably all of the, preferred embodiments of said control method as defined by the preferred features of said method described below.

Preferably said user command comprises defining at least one among: a geometric shape of said virtual element, a geometric dimension of said virtual element, a spatial position of said virtual element in said visualization of the real space. In this way, the method is widely versatile.

In one embodiment, modifying said virtual element comprises manipulating said virtual element by said user (for example directly, if the artificial reality system is capable of visualizing a virtual representation of the hands of the user, and/or by means of a user screen structured to receive as input numerical values set by the user representative of one or more of the aforementioned options comprised in the user command). In this way, the modification is extremely intuitive and simplified.

Preferably said user command modifies said virtual element in said visualization of the real space by means of one or more of the following ways: rigid translation of the virtual element, expansion of at least one dimension of the virtual element, contraction of at least one dimension of the virtual element. In this way, the spatial position of the virtual element in the visualization of the real space and the geometric dimension of the virtual element are modified respectively in a simple and intuitive manner.

In one embodiment, defining said geometric shape of said virtual element is performed as a function of a geometric shape of said article. In this way, precision and/or reliability are improved.

Preferably said digital scan comprises a plurality of virtual points referenced with respect to a predefined reference system.

Preferably said predefined reference system is georeferenced. In this way, the digital scan can be oriented consistently with the real space.

Preferably said method comprises uniquely correlating said digital scan and said visualization of the real space with each other.

Preferably said predefined reference system is common to said visualization of the real space. In this way the digital scan and the visualization of the real space are correlated in a simple manner.

Preferably obtaining said mesh comprises processing said portion of said digital scan, more preferably comprises selecting a subset of virtual points of said plurality of virtual points, each virtual point of said subset being located within said control volume. Preferably obtaining said mesh comprises creating a virtual grid connecting said virtual points of said subset of virtual points, said grid defining at least one portion of virtual surface.

Preferably said mesh comprises nodes mutually connected by means of straight segments and faces defined (e.g. delimited) by said straight segments.

Preferably said nodes correspond to said virtual points of said subset of virtual points. Preferably setting said control parameter comprises defining a gripping point on said mesh.

Preferably said handling system is controlled to grasp said article as a function of said gripping point.

In one embodiment, defining said gripping point comprises:
**i)** calculating a barycenter of said control volume;
**ii)** projecting said barycenter along a predefined direction until intercepting an intersection point belonging to said mesh; and
**iii)** identifying said gripping point as said intersection point.

Such embodiment is particularly advantageous in combination with an automatic execution of the aforementioned steps i)-iii) by the processing unit.

Preferably said predefined direction is a direction having at least a respective vertical component, more preferably a purely vertical direction, for example with respect to said predefined reference system. In this way, the gripping point is identified in a particularly rational manner, for example in combination with gripper-type or suction-cup gripping elements, and/or the degree of certainty of actual grasping of the article in the desired modalities is improved (e.g. superiorly to the article).

In one embodiment, defining said gripping point comprises:
**a)** defining, in said visualization of the real space, a candidate gripping point; and
**b)** projecting said candidate gripping point onto said mesh to obtain said gripping point.

Preferably, defining said candidate gripping point comprises:
**a1)** visualizing said candidate gripping point in said visualization of the real space. In this way, said candidate gripping point is easy for the user to visualize.

Preferably, defining said candidate gripping point comprises:
**a2)** positioning, in said visualization of the real space, said candidate gripping point in proximity of said article. In this way, defining the gripping point is simplified.

Preferably positioning said candidate gripping point is performed manually by said user by means of said artificial reality system, or automatically by said processing unit.

In a first embodiment, projecting said candidate gripping point comprises:
**i)** calculating a respective distance between said candidate gripping point and each of two or more nodes of said mesh; and
**ii)** identifying said gripping point as the node of the mesh having the smallest respective distance to said candidate gripping point.

Such embodiment is particularly advantageous for positioning the gripping point in the immediate vicinity of the candidate gripping point initially selected.

In a second embodiment, projecting said candidate gripping point comprises:
**i)** performing a projection of said candidate gripping point parallel to one or more axes of said predefined reference system (common to said mesh); and
**ii)** identifying said gripping point as an intersection point between said projection of the candidate gripping point and said mesh.

Such embodiment is particularly advantageous in terms of simplicity.

In a third embodiment, projecting said candidate gripping point comprises:
**i)** for each face of one or more faces of said mesh, calculating a respective plurality of orthogonally oriented vectors, away from said each face; and
**ii)** identifying said gripping point as an origin point of the oriented vector that intersects said candidate gripping point.

Such embodiment is particularly advantageous when it is useful to also know the orientation in space of the portion of surface of the article arranged at the gripping point, for example when the handling system grasps the article by means of suction cups. The aforementioned first, second and third embodiments according to which the projection of the candidate gripping point is performed may be adopted alternatively or in combination with each other.

In one embodiment defining said gripping point is performed automatically by said processing unit, or manually by said user.

Preferably said handling system comprises a robotic arm having at least one actuator (e.g. mechanical grippers, suction cups, electro-adhesive systems, vacuum suction systems, etc.) structured to grasp said article.

Preferably said method comprises setting a movement trajectory of said article by said handling system as a function of at least one among: said control parameter and an encumbrance of said article. In this way precision and/or reliability of control are further improved, as better described below.

Preferably said encumbrance of the article is estimated as a function of said mesh. Preferably said gripping point corresponds to a starting point of said trajectory. Preferably setting said trajectory further comprises defining a release point of said article by said handling system.

Preferably said release point corresponds to an end point of said trajectory.

Preferably defining said release point is performed manually by said user by means of said artificial reality system in said visualization of the real space, or automatically by a processing unit of the artificial reality system.

Preferably setting said trajectory comprises calculating said trajectory as a function of said gripping point and release point. In this way, precision is improved.

Preferably setting said trajectory comprises, by means of said artificial reality system, visualizing, in superposition to said visualization of said real space, a further virtual element representing a candidate movement trajectory of said article by said handling system. In this way the trajectory is easy for the user to visualize.

Preferably setting said trajectory comprises defining, more preferably in the visualization of the real space, a further control volume as a function of said candidate trajectory, said further control volume comprising said candidate trajectory.

Preferably setting said trajectory comprises obtaining a further mesh of a further portion of said visualization of the real space enclosed by said further control volume as a function of a further portion of said digital scan corresponding to said further portion of the visualization of the real space. In this way computational effort is further limited. According to the Applicant, in fact, by selecting (by the user or automatically by the processing unit) an appropriate further control volume, enclosing the candidate trajectory, it is possible to obtain the further mesh of (only) the portion of the visualization of the real space enclosed by the further control volume, in order to detect only any obstacles to the movement of the article lying along the trajectory or in the immediate vicinity thereof, without necessarily obtaining the mesh of the entire visualization of the real space. In fact, it is only along the candidate trajectory that the system is advantageously programmed to detect any obstacles by means of the respective further mesh.

Preferably the method comprises simulating said mesh in (virtual) movement entirely along said candidate trajectory.

Preferably the method comprises calculating a risk of collision between said further mesh and said mesh during said movement.

Preferably setting said trajectory comprises defining said trajectory as a function of said candidate trajectory and said risk of collision. In this way, defining the trajectory is particularly advantageous and/or computationally simple and/or efficient.

Preferably defining the trajectory comprises performing a comparison of said risk of collision with a given threshold.

Preferably defining the trajectory comprises setting said trajectory equal to said candidate trajectory when said risk of collision is less than or equal to the given threshold.

Preferably defining the trajectory comprises modifying said candidate trajectory to generate a new candidate trajectory and repeating, on the basis of the new candidate trajectory the calculation of the risk of collision and the comparison with the given threshold when said risk of collision is greater than the given threshold.

Preferably defining said trajectory comprises evaluating whether said mesh (more preferably a respective virtual surface portion belonging to said mesh) contacts (or penetrates) (in at least one given simulated instantaneous position of said mesh along said candidate trajectory) said further mesh (more preferably a respective virtual surface portion belonging to said further mesh) during said movement to provide said risk of collision.

In one embodiment, said risk of collision assumes a first value (e.g. numerical, for example equal to 1) provided that said collision is present (in at least one given instantaneous position of said mesh along said candidate trajectory).

In one embodiment, said risk of collision assumes a second value, different from said first value (e.g. numerical, for example equal to 0), provided that said collision is absent (in each instantaneous position of said mesh along said candidate trajectory).

In one embodiment, defining said trajectory comprises, preferably when said risk of collision assumes said first value, setting said trajectory as absent. For example, the trajectory coincides with an initial position of said mesh (e.g. with respect to the reference system).

In one embodiment, defining said trajectory comprises, preferably when said risk of collision assumes said first value, modifying said candidate trajectory to obtain a new candidate trajectory (which is preferably substituted for the previous candidate trajectory). In one embodiment, defining said trajectory comprises, preferably when said risk of collision assumes said second value, setting said trajectory equal to the candidate trajectory.

In one embodiment, defining said trajectory is performed iteratively over time as a function of said risk of collision, preferably until said risk of collision assumes said second value and/or until performing a number of iterations equal to a predefined maximum number. In this way, reliability is further improved.

Preferably obtaining said further mesh comprises one or more of, more preferably all of, the features of obtaining said mesh (where necessary referred to the further control volume). In this way, the method is highly rational and simplified.

Preferably said obtaining said further mesh and/or said defining said trajectory are repeated cyclically over time with a predetermined period. In this way, reliability is further improved since it is possible to update over time the information relating to any obstacles that have appeared at a later time (with respect to the first obtaining of the further mesh) in correspondence with the trajectory.

Preferably said method comprises controlling said handling system also as a function of said trajectory. In this way, efficiency and/or precision and/or reliability of control are improved.

It should be specified that some steps of the method described above may be independent of the execution order reported, except where a sequence or simultaneity between two or more steps is expressly indicated. Furthermore, some steps may be optional. Furthermore, some steps may be performed repetitively, or may be performed in series or in parallel with other steps of the method.

### Brief description of the figures

Figure 1 schematically shows a control apparatus capable of performing a control method according to the present invention;
Figures 2-7 schematically show a respective phase of a control method according to a respective embodiment of the present invention;
Figure 8 shows a block diagram of an embodiment of the control method according to the present invention.

### Detailed description of some embodiments of the invention

The features and advantages of the present invention will be further clarified by the following detailed description of some embodiments, provided by way of non-limiting example of the present invention, with reference to the attached figures.

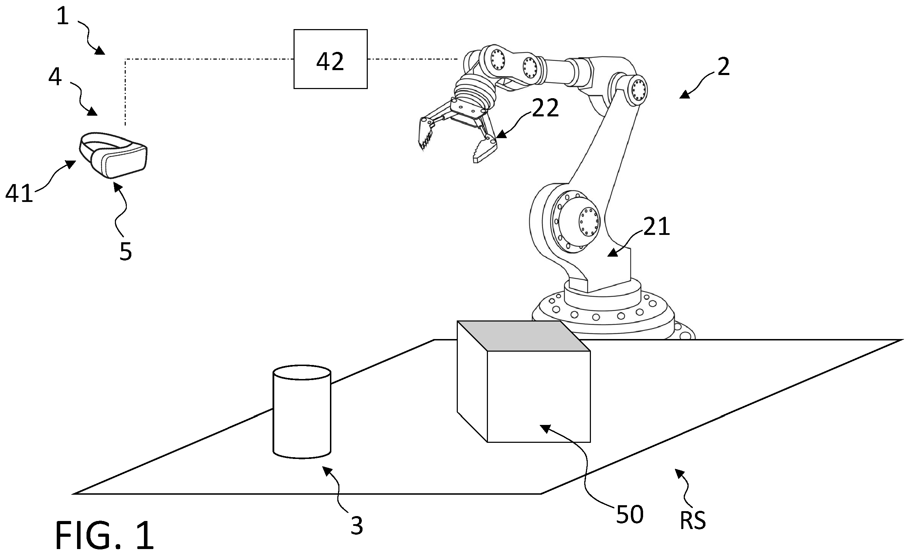

In Figure 1, reference numeral 1 globally indicates a control apparatus of a handling system 2 of an article 3.

Exemplarily the handling system 2 comprises a robotic arm 21, for example having five or more axes of rotation, for example of a known type, having an actuator 22 arranged at an end of the robotic arm and structured to be able to grasp the article 3.

Exemplarily the apparatus 1 further comprises an artificial reality system 4. For example, the artificial reality system 4 is programmed to be able to perform extended reality functions.

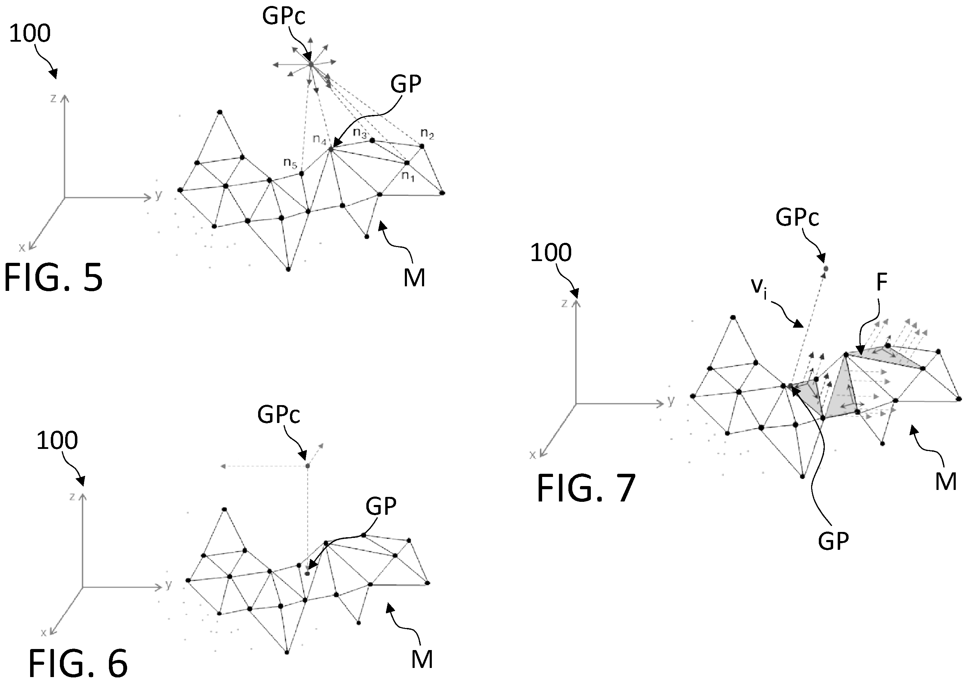

Exemplarily the apparatus 1 comprises an acquisition device 5. Conceptually, the acquisition device 5 is programmed to operate in synergy with the artificial reality system 4, as is for example known in the art. For example, the acquisition device 5 may comprise a LIDAR technology system capable of scanning a real space and returning a digital scan. Exemplarily the digital scan comprises a plurality of virtual points (partially shown in Figures 5-7 in nodes n1-n5 and the other points of the grids shown therein), also referred to in technical jargon as a "point cloud", exemplarily referenced with respect to a predefined reference system 100 (Figures 5-7) which is in turn georeferenced. Exemplarily each virtual point corresponds to the interception point between the electromagnetic radiation beam (e.g. laser) coming from the acquisition device and a physical obstacle of the real space, thereby being able to reconstruct the real space itself by points (as is for example known).

Exemplarily the predefined reference system 100 is represented by Cartesian coordinates, but may optionally also be expressed in polar coordinates or cylindrical coordinates.

Exemplarily furthermore, the artificial reality system 4 comprises at least one visor 41 (Figure 1 - shown only schematically), for example of the type wearable by a user (e.g. Google Lens^{™}, Oculus Rift^{™}, HoloLens 2^{™}, Meta Quest 3^{™}, etc.). Exemplarily the visor 41 is capable of capturing images (photos and/or videos, e.g. matrix-based, color, etc.) of the real space in order to then return the images to the user. The acquisition of images is intended both in the case in which the visor is opaque to the direct view of the user and comprises a camera and a monitor for visualizing the images acquired by the camera, and in the case in which the visor comprises a transparent visor through which the user can directly view the real space and onto which the virtual elements are projected.

In one embodiment (not shown), the artificial reality system may comprise, in addition or as an alternative to the visor, a tablet or a smartphone provided with a camera and a touchscreen display, and through which images or videos of the real space can be acquired and shown to the user on the display.

Exemplarily, not shown, the artificial reality system further comprises at least one device structured to receive command inputs from a user, such as for example an input peripheral, such as a keyboard, a touchscreen display, and/or one or more handheld controllers.

In embodiments, the acquisition device 5 may be integrated into the handling system 2, for example into the robotic arm 21, for example at the actuator 22 and/or at a support base of the robotic arm 21.

Exemplarily the artificial reality system 4 comprises a processing unit 42 (shown only schematically).

Exemplarily the processing unit 42 is connected to the handling system 2 to control the handling system 2.

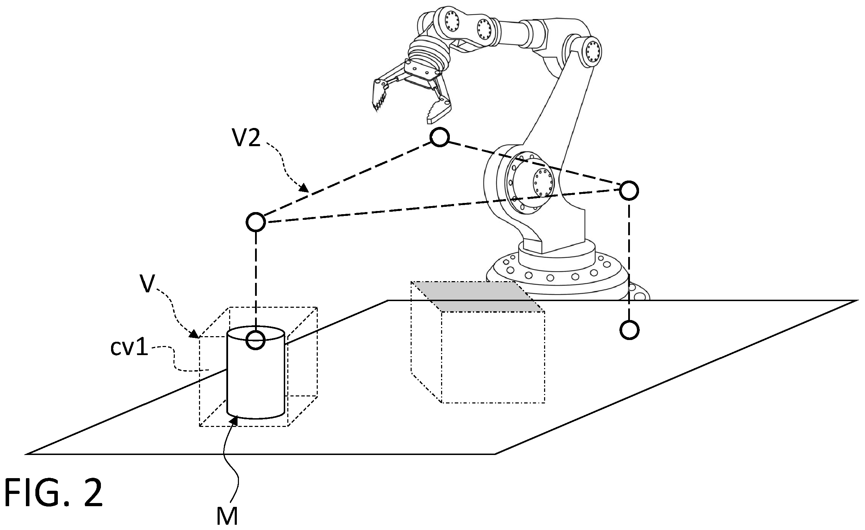

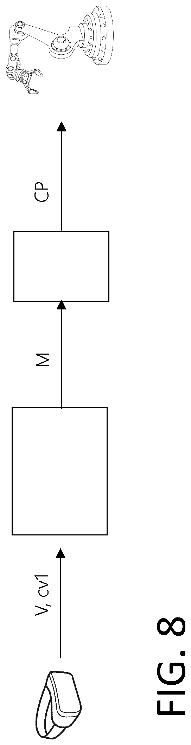

In the following, a control method of the handling system 2 (Figures 2-8) will be exemplarily described, for example implementable by means of the apparatus 1 described above.

Exemplarily the method comprises scanning, by means of the acquisition device 5, a real space RS containing the article 3 to obtain the digital scan of the real space RS. Exemplarily the method comprises visualizing, by means of the artificial reality system 4, in superposition to a visualization of the real space RS, a virtual element V representing a control volume cv1.

Exemplarily the virtual element V is visualized by the user in superposition to the visualization of the real space RS by means of the visor 41 operated by the processing unit 42.

Alternatively, if for example the control method is performed remotely, provision may be made for arranging at least one camera that frames the real space RS and sends the recorded images (preferably in real time) to a video terminal, on which images the virtual element V is visualized.

An example of the visualization provided to the user by the method is schematically shown, for example, in Figures 2-4, with different virtual elements V, V2 shown in superposition to the visualization of the real space RS, as will be better described below. Exemplarily the virtual element V defines a control volume cv1 having, in detail, the shape of a parallelepiped. It is understood that the shape of the control volume may vary, including other geometric shapes, such as a sphere, a cylinder, or other shapes defining an arbitrary (virtual) volume, preferably closed.

Exemplarily the processing unit 42 is specifically programmed to implement the following phases of the control method.

Exemplarily the method comprises receiving a user command as input and modifying, as a function of the received user command, the virtual element V so that the control volume cv1 encloses, in the visualization of the real space RS, a portion of the visualization of the real space RS in which the article 3 is represented (as, for example, shown in Figure 2).

For example, the aforementioned user command comprises defining at least one among: a geometric shape of the virtual element V (for example by selecting the desired shape from a library of available shapes and/or by manually drawing a desired shape), a geometric dimension of the virtual element V, a spatial position of the virtual element V in the visualization of the real space RS.

More in detail, modifying the virtual element V may for example comprise manipulating the virtual element V directly by the user, if the artificial reality system is capable of visualizing a virtual representation of the hands of the user (and therefore, by means of gestures, the user is capable of moving the virtual element within the visualization of the real space and/or modifying the shape thereof).

In combination or as an alternative, the manipulation may be performed by the user by means of a screen structured to receive as input numerical values set by the user representative of one or more of the aforementioned options comprised in the user command, for example the measurements of the dimensions of the virtual element, the positioning coordinates (for example of a vertex), etc.

In one embodiment, the user command may modify the virtual element in the visualization of the real space by means of one or more of the following ways: rigid translation of the virtual element V, expansion of at least one dimension of the virtual element V, contraction of at least one dimension of the virtual element V.

In one embodiment, defining the geometric shape of the virtual element may further be performed as a function of a geometric shape of the article (e.g. known to the user). For example, in the case of an article having a well-defined rigid shape, it may be particularly advantageous to use a control volume having a parallelepiped, cylindrical or spherical shape.

Exemplarily the method therefore comprises obtaining a mesh M of the portion of the visualization of the real space RS enclosed within the control volume cv1 as a function of a portion of the digital scan corresponding to such portion of the visualization of the real space RS.

Exemplarily in order to obtain the above in a simple manner, the digital scan and the visualization of the real space are uniquely correlated with each other, for example by referencing both with respect to the same predefined reference system 100, in such a way that a generic portion of the visualization of the real space corresponds to one and only one respective portion of the digital scan (i.e. a subset of virtual points of the aforementioned plurality of virtual points).

Exemplarily the mesh comprises nodes (e.g. virtual points n1-n5 of Figure 5 and the other virtual points of the grid shown in Figures 5-7) mutually connected by means of straight segments, and faces (exemplarily having a triangular shape) delimited by such straight segments. Exemplarily the mesh shown in the figures is of the triangular polygonal type (triangular mesh), although any known type of mesh may be used.

In detail, obtaining the mesh M comprises processing the portion of the digital scan, more precisely selecting a subset of virtual points (the aforementioned nodes) of the plurality of virtual points of the digital scan, each virtual point of the subset being located within the control volume cv1 (as a consequence of the aforementioned one-to-one relationship between the digital scan and the visualization of the real space), and creating a virtual grid connecting the virtual points of the subset of virtual points. Exemplarily the grid virtually reproduces the external surface of the articles whose representation is contained within the control volume cv1, including the external surface of the article 3.

Preferably the number of virtual points of the subset (that is, those representing the nodes of the grid) is much smaller than the virtual points of the digital scan originally acquired, thereby limiting the data to be processed by the processing unit and therefore further improving the method in terms of efficiency and rapid response to user commands.

Exemplarily therefore, the mesh M (shown for example partially in Figures 5-7) is obtained for the entire encumbrance of the article 3.

Exemplarily the method therefore comprises setting a control parameter CP of the handling system 2 as a function of the mesh M and then controlling the handling system 2 as a function of the control parameter CP.

Exemplarily setting the control parameter CP comprises defining a gripping point GP on the mesh M, wherein the handling system 2 is controlled to grasp the article 3 as a function of the gripping point GP.

The definition of the gripping point GP may take place in different ways, which will be described below.

In one embodiment (not shown), defining the gripping point GP comprises:
**i)** calculating a barycenter of the control volume cv1;
**ii)** projecting the barycenter along a predefined direction (preferably vertical, parallel to the z-axis of the reference system 100) until intercepting an intersection point belonging to the mesh M; and
**iii)** identifying the gripping point GP as the intersection point.

Preferably the routine described above is performed automatically by the processing unit 42.

Alternatively, or in combination, the gripping point GP may be defined by means of the following routine comprising:
**a)** defining, in the visualization of the real space, a candidate gripping point GPc; and
**b)** projecting the candidate gripping point GPc onto the mesh M to obtain the gripping point GP.

More in detail, defining the candidate gripping point GPc exemplarily comprises **a1)** visualizing the candidate gripping point GPc in the visualization of the real space RS and **a2)** positioning, in the visualization of the real space, the candidate gripping point GPc in proximity of the article 3, preferably manually, by means of the artificial reality system, by the user (who may therefore at will move the candidate gripping point GPc close to the portion of the article at which the user wishes the article to be substantially grasped by the handling system 2). Alternatively, the candidate gripping point may be positioned in proximity of the article 3 automatically by the processing unit 42.

In a first embodiment shown in Figure 5, projecting the candidate gripping point GPc exemplarily comprises:
**i)** calculating a respective distance between the candidate gripping point GPc and each of a plurality of nodes n1-n5 of the mesh M (identified automatically by the software and/or selected by the user); and
**ii)** identifying the gripping point GP as the node n1-n5 of the mesh M having the smallest respective distance to the candidate gripping point GPc (in the example node n4).

In a second embodiment shown in Figure 6, projecting the candidate gripping point GPc comprises:
**i)** performing a projection of the candidate gripping point GPc parallel to the z-axis of the predefined reference system 100; and
**ii)** identifying the gripping point GP as an intersection point (e.g. any node or a point of a face F of the mesh M) between the projection of the candidate gripping point GPc and the mesh M (in the case of two or more intersection points, it is preferred to select the one having the smallest distance from the candidate gripping point GPc).

In a third embodiment shown in Figure 7, projecting the candidate gripping point GPc comprises:
**i)** for each face F of one or more faces F of the mesh M, calculating a respective plurality of oriented vectors vi orthogonally, away from face F; and
**ii)** identifying the gripping point GP as an origin point of the oriented vector vi that intersects the candidate gripping point GPc.

Exemplarily the method further comprises setting a movement trajectory of the article 3 by means of the handling system 2 as a function of the control parameter CP. Exemplarily furthermore, setting the trajectory is also performed as a function of an encumbrance of the article estimated as a function of the mesh M.

In detail, the gripping point GP corresponds to a starting point of the trajectory and setting the trajectory exemplarily comprises defining a release point RP of the article 3 by the handling system 2. Exemplarily, the release point RP corresponds to an end point of the trajectory.

Exemplarily defining the release point RP is performed manually by the user by means of the artificial reality system 4 in the visualization of the real space (or automatically by a processing unit 42).

Exemplarily setting the trajectory therefore comprises calculating the trajectory as a function of the gripping point GP and release point RP. In detail, further points belonging to the trajectory are exemplarily also used to calculate the trajectory itself, such as safety points SP1 and SP2, which exemplarily represent the maximum lifting points of the article 3 by the handling system 2.

In detail, setting the trajectory exemplarily comprises, by means of the artificial reality system 4, visualizing, in superposition to the visualization of the real space, a further virtual element V2 representing a candidate movement trajectory of the article 3. Furthermore, setting the trajectory exemplarily comprises defining, in the visualization of the real space RS, a further control volume cv2 as a function of the candidate trajectory, the further control volume cv2 comprising the candidate trajectory. Exemplarily the further control volume cv2 is shown having a parallelepiped shape centered on the candidate trajectory. Further shapes and/or dimensions of the further control volume cv2 may be contemplated.

Preferably setting the trajectory comprises obtaining a further mesh M2 of a further portion of the visualization of the real space enclosed within the further control volume cv2 as a function of a further portion of the digital scan (not shown) corresponding to the further portion of the visualization of the real space (for example in a manner analogous to that described above with reference to mesh M).

Exemplarily this enables realizing the mesh of the obstacle 50 (shown only schematically) so that the system can recognize the presence of such obstacle arranged along the candidate trajectory (and therefore potentially interfering with the movement of the article 3).

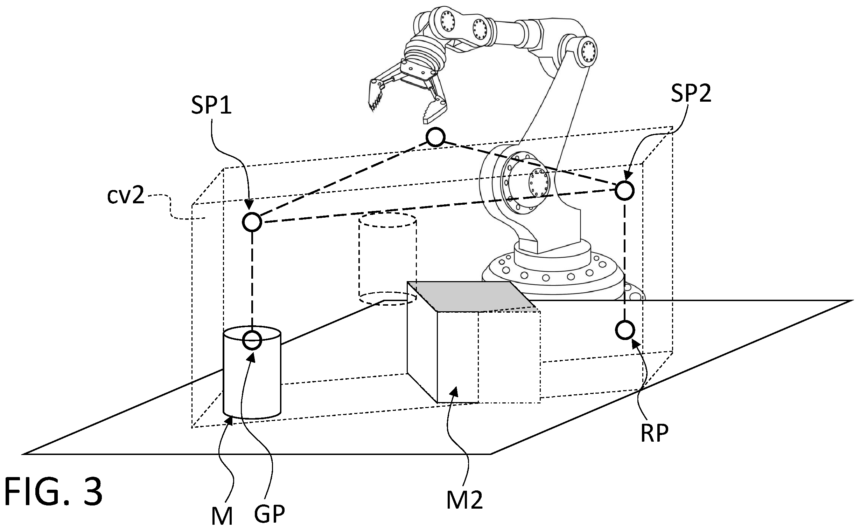

Exemplarily setting the trajectory therefore comprises defining the trajectory of the article 3 as a function of the candidate trajectory and a risk of collision between the further mesh M2 and the mesh M simulated in movement along the entire candidate trajectory (Figure 3, dashed cylinder).

Defining the trajectory exemplarily comprises simulating the mesh M in virtual movement entirely along the candidate trajectory and evaluating whether the mesh M (preferably a respective virtual surface portion belonging to the mesh) contacts, or penetrates, (in at least one given simulated instantaneous position of the mesh M along the candidate trajectory) the further mesh M2 (preferably a respective virtual surface portion belonging to the further mesh M2) during the virtual movement to provide the risk of collision.

For example, the risk of collision assumes a first value (e.g. numerical, for example equal to 1) provided that the collision is present (in at least one given instantaneous position of the mesh along the candidate trajectory), or assumes a second value, different from the first value, (e.g. numerical, for example equal to 0) provided that the collision is absent (in each instantaneous position of the mesh along the candidate trajectory).

In one embodiment, defining the trajectory exemplarily comprises, preferably when the risk of collision assumes the first value, setting the trajectory as absent. For example, the trajectory coincides with an initial position of the mesh (e.g. with respect to the reference system).

In one embodiment, defining the trajectory exemplarily comprises, preferably when the risk of collision assumes the first value, modifying the candidate trajectory to obtain a new candidate trajectory (which is preferably substituted for the previous candidate trajectory). In one embodiment, defining the trajectory comprises, preferably when the risk of collision assumes the second value, setting the trajectory equal to the candidate trajectory.

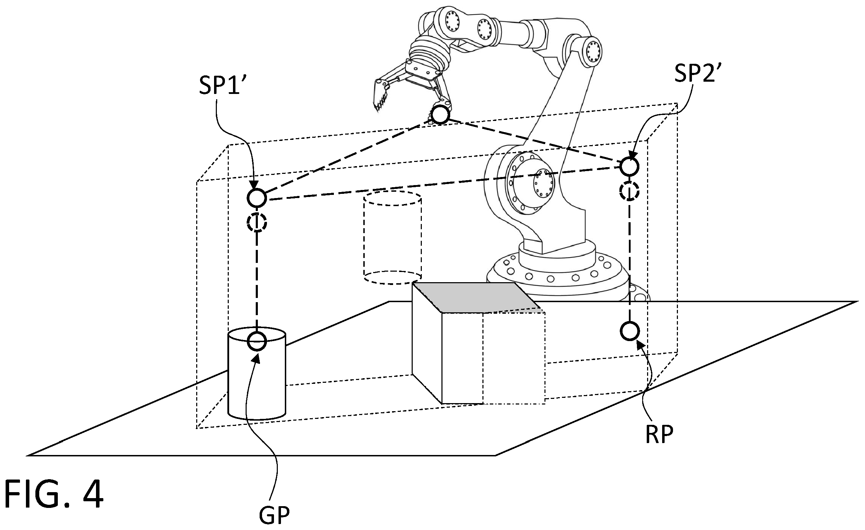

In the example shown in Figures 3 and 4, the candidate trajectory initially proposed and shown in Figure 3, following simulation of the movement of the mesh M along the candidate trajectory itself, would return an error message to the user since the system, by means for example of assigning the first value to the risk of collision, predicts the collision between the obstacle 50 (in the portion of such obstacle comprised within the further control volume cv2 and therefore obtained as further mesh M2) and the mesh M. Exemplarily therefore, defining the trajectory comprises modifying the candidate trajectory, for example, as shown in Figure 4, by lifting vertically the safety points SP1 and SP2 to new safety points SP1' and SP2' such that the encumbrance of the article (simulated) does not collide with the further mesh M2 of the obstacle 50 during movement of the article along the new candidate trajectory (in such case the system assigns the second value to the risk of collision).

In one embodiment, defining the trajectory is performed iteratively over time as a function of the risk of collision, preferably until the risk of collision assumes the second value and/or until performing a number of iterations equal to a predefined maximum number.

In general, the process may be repeated automatically by the processing unit 42 in an iterative manner until reaching a candidate trajectory result for which the system returns a risk of collision equal to the second value.

Exemplarily the method also comprises controlling the handling system 2 also as a function of the set trajectory.

Optionally, geometric constraints and/or movement encumbrance constraints of the handling system 2 may be comprised in the calculation of the candidate trajectory and, consequently, in defining the trajectory by modifying the candidate trajectory. Exemplarily furthermore, obtaining the further mesh M2 and defining the trajectory are repeated cyclically over time with a predetermined period, in order to keep the maneuvering space of the handling system 2 along the trajectory monitored so as to promptly detect any new obstacles that may have appeared in the meantime.

## Claims

1. Control method of a handling system (2) of an article (3), said method comprising:
- scanning, by means of an acquisition device (5), a real space (RS) containing said article (3) to obtain a digital scan of said real space (RS);
- visualizing, by means of an artificial reality system, in superposition to a visualization of said real space (RS), a virtual element (V) defining a control volume (cv1);
- receiving a user command as input and modifying, as a function of said received user command, said virtual element (V) so that said control volume (cv1) encloses, in the visualization of the real space (RS), a portion of said visualization of said real space (RS) in which said article (3) is represented;
- obtaining a mesh (M) of said portion of the visualization of the real space (RS) enclosed by said control volume (cv1) as a function of a portion of said digital scan corresponding to said portion of said visualization of the real space (RS);
- setting a control parameter (CP) of said handling system (2) as a function of said mesh (M);
- controlling said handling system (2) as a function of said control parameter (CP).

2. Method according to claim 1, wherein said user command comprises defining at least one among: a geometric shape of said virtual element (V), a geometric dimension of said virtual element (V), a spatial position of said virtual element (V) in said visualization of the real space (RS).

3. Method according to any one of the previous claims, wherein said user command modifies said virtual element (V) in said visualization of the real space (RS) by means of one or more of the following ways: rigid translation of the virtual element (V), expansion of at least one dimension of the virtual element (V), contraction of at least one dimension of the virtual element (V).

4. Method according to any one of the previous claims, wherein said digital scan comprises a plurality of virtual points referenced with respect to a predefined reference system (100), and wherein obtaining said mesh (M) comprises selecting a subset of virtual points of said plurality of virtual points, each virtual point of said subset being located within said control volume (cv1), and creating a virtual grid connecting said virtual points of said subset of virtual points, said grid defining at least one portion of virtual surface.

5. Method according to any one of the previous claims, wherein setting said control parameter (CP) comprises defining a gripping point (GP) on said mesh (M), said handling system (2) being controlled to grasp said article (3) as a function of said gripping point (GP).

6. Method according to claim 5, wherein defining said gripping point (GP) comprises i) calculating a barycenter of said control volume, ii) projecting said barycenter along a predefined direction until intercepting an intersection point belonging to said mesh (M), and iii) identifying said gripping point (GP) as said intersection point.

7. Method according to claim 5, wherein defining said gripping point (GP) comprises a) defining, in said visualization of the real space (RS), a candidate gripping point (GPc), and b) projecting said candidate gripping point (GPc) onto said mesh (M) to obtain said gripping point (GP).

8. Method according to claim 7, wherein defining said candidate gripping point (GPc) comprises visualizing said candidate gripping point (GPc) in said visualization of the real space (RS) and positioning, in said visualization of the real space (RS), said candidate gripping point (GPc) in proximity of said article (3).

9. Method according to claim 7 or 8, wherein said mesh (M) comprises nodes mutually connected by means of straight segments and faces defined by said straight segments, and wherein projecting said candidate gripping point (GPc) comprises i) calculating a respective distance between said candidate gripping point (GPc) and each of two or more nodes of said mesh (M), and ii) identifying said gripping point (GP) as the node of the mesh (M) having the smallest respective distance to said candidate gripping point (GPc).

10. Method according to claim 7 or 8, wherein projecting said candidate gripping point (GPc) comprises: i) performing a projection of said candidate gripping point (GPc) parallel to one or more axes of a predefined reference system (100) common to said mesh (M), and ii) identifying said gripping point (GP) as an intersection point between said projection of the candidate gripping point (GPc) and said mesh (M).

11. Method according to claim 7 or 8, wherein said mesh (M) comprises nodes mutually connected by means of straight segments and faces defined by said straight segments, and wherein projecting said candidate gripping point (GPc) comprises: i) for each face (F) of one or more faces (F) of said mesh (M), calculating a respective plurality of orthogonally oriented vectors (vi), away from said each face (F), and ii) identifying said gripping point (GP) as an origin point of the oriented vector (vi) that intersects said candidate gripping point (GPc).

12. Method according to any one of the previous claims, wherein said handling system (2) comprises a robotic arm (21) having at least one actuator (22) structured to grasp said article (3), and wherein said method comprises setting a movement trajectory of said article (3) by said handling system (2) as a function of at least one of said control parameter (CP) and an encumbrance of said article (3), and wherein said method comprises controlling said handling system (2) also as a function of said trajectory.

13. Method according to any one of claims from 5 to 11 and claim 12, wherein said gripping point (GP) corresponds to a starting point of said trajectory, wherein setting said trajectory further comprises defining a release point (RP) of said article (3) by said handling system (2), said release point (RP) corresponding to an end point of said trajectory, and calculating said trajectory as a function of said gripping point (GP) and release point (RP), and wherein defining said release point (RP) is performed manually by said user by means of said artificial reality system (4) in said visualization of the real space (RS), or automatically by a processing unit (42) of said artificial reality system (4).

14. Method according to claim 12 or 13, wherein setting said trajectory comprises:
i) by means of said artificial reality system (4), visualizing, in superposition to said visualization of said real space (RS), a further virtual element (V2) representing a candidate movement trajectory of said article (3) by said handling system (2);
ii) defining, in the visualization of the real space (RS), a further control volume (cv2) as a function of said candidate trajectory, said further control volume (cv2) comprising said candidate trajectory;
iii) obtaining a further mesh (M2) of a further portion of said visualization of the real space (RS) enclosed by said further control volume (cv2) as a function of a further portion of said digital scan corresponding to said further portion of the visualization of the real space (RS);
iv) simulating a movement of said mesh (M) entirely along said candidate trajectory and calculating a risk of collision between said further mesh (M2) and said mesh (M) during said movement;
v) defining said trajectory as a function of said candidate trajectory and said risk of collision.

15. Method according to any one of the previous claims, comprising obtaining said mesh (M) only of the portion of the visualization of said real space (RS) enclosed by said control volume (cv1).
